**Europäisches Patentamt**

**European Patent Office**

**Office européen des brevets**

(19)

(11) Numéro de publication: **0 194 389**
**A1**

(12)

# DEMANDE DE BREVET EUROPEEN

(21) Numéro de dépôt: **85400464.5**

(22) Date de dépôt: **12.03.85**

(51) Int. Cl.⁴: **H 01 G 1/08**

(43) Date de publication de la demande:
**17.09.86 Bulletin 86/38**

(84) Etats contractants désignés:
**DE**

(71) Demandeur: **Jakoubovitch, Albert**
**Pézènes Les Mines**
**F-34600 Bedarieux(FR)**

(72) Inventeur: **Jakoubovitch, Albert**
**Pézènes Les Mines**
**F-34600 Bedarieux(FR)**

(54) **Refroidissement d'un condensateur de puissance à empilage.**

(57) Condensateur de puissance constitué par un empilage de lames de mica, et des lames de métal d'épaisseur suffisante pour évacuer les calories produites par l'échauffement du diélectrique, celles-ci étant soudées à un collecteur refroidi.

*Fig 2*

EP 0 194 389 A1

Croydon Printing Company Ltd.

La présente invention a pour objet un perfectionnement aux condensateurs électriques de puissance destinés au chauffage inductif.

Dans les dispositifs utilisés habituellement, chaque élément de condensateur est constitué par un empilage d'une lame d'un matériau diélectrique et d'une lame métallique.

L'ensemble des lames métalliques sont réunies électriquement à deux électrodes massives disposées de part et d'autre de l'empilage décrit ci-dessus, et dont le but est d'évacuer l'énergie produite à l'intérieur du condensateur.

Dans un tel dispositif, le fait que chacune des électrodes est disposée de de part et d'autre de l'empilage de lames diélectriques et métalliques, les calories produites au sein d'un tel empilage doivent traverser alternativement le diélectrique et le métal pour arriver jusqu'aux électrodes destinées à les évacuer, afin de permettre le refroidissement du condensateur.

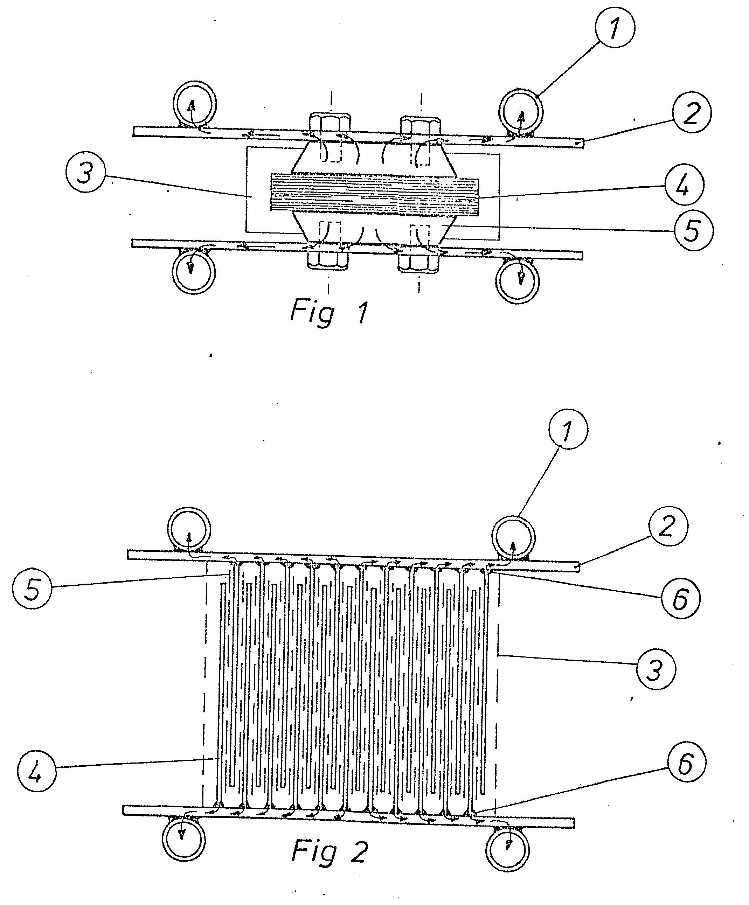

Le dessin annexé représente un tel condensateur dans sa figure 1.

L'empilage de lames métalliques et diélectriques 4 est situé entre deux électrodes 5 qui collectent les calories produites dans l'empilage 4.

Les calories produites sont évacuées par conduction dans les plaques métalliques 2 refroidies par un fluide circulant dans les tubes 1.

Un tel condensateur est habituellement moulé dans un enrobage plastique représenté en 3.

Un tel dispositif qui utilise la conduction thermique au travers de lames isolantes a pour inconvénient de ne pas permettre des empilages de grande épaisseur, puisque l'évacuation de calories sera d'autant plus mauvaise que l'épaisseur de l'empilage sera importante.

La présente invention a pour objet de supprimer cet inconvénient.

Dans la réalisation décrite en figure 2, à titre d'exemple, des lames métalliques 4 sont introduites de part et d'autre de chaque lame diélectrique 5 et réunies par soudure 6 à deux plaques collectrices 2.

L'évacuation de calories se fait comme précédemment par un fluide circulant dans les tubes 1

Dans une telle réalisation, la section de chaque lame 4, habituellement réalisée en cuivre, est déterminée par la quantité de calories à évacuer et l'évacuation se faisant individuellement pour chaque lame diélectrique, il est possible d'empiler un nombre indifférent d'éléments constitués par deux lames de cuivre et une lame de diélectrique, afin d'arriver à un condensateur de valeur aussi élevée que souhaitée.

2

0194389

L'invention est particulièrement destinée à la construction de batteries de condensateurs de grande puissance utilisées en chauffage inductif.

Le caractère compact des condensateurs constitués selon l'invention, permet de connecter ces derniers directement aux bornes d'un générateur de chauffage inductif, éliminant ainsi les connections habituellement utilisées pour assembler un nombre important de condensateurs électriques et les réunir aux bornes d'utilisation.

3

0194389

## REVENDICATIONS

1. Perfectionnement aux condensateurs électriques de puissance caractérisés par l'utilisation de lames métalliques (4) figure 2 intercalées entre des lames de matériaux diélectriques (5) figure 2 et soudées à un collecteur métallique (6) figure 2, ces lames métalliques étant destinées à évacuer, en direction du collecteur (2), les calories produites par le fonctionnement du condensateur.

2. Perfectionnement conforme à la revendication (1) caractérisé par le fait que chacun des collecteurs (2) figure 2 est refroidi soit par conduction au contact d'une surface métallique de grande dimension, soit par un fluide circulant dans des tubes métalliques reliés thermiquement au collecteur (2).

Fig 1

Fig 2

Office européen
des brevets

**RAPPORT DE RECHERCHE EUROPEENNE**

## DOCUMENTS CONSIDERES COMME PERTINENTS

| Catégorie | | Citation du document avec indication, en cas de besoin, des parties pertinentes | Revendication concernee | CLASSEMENT DE LA DEMANDE (Int Cl 4) |
|---|---|---|---|---|
| X | | US-A-2 159 826 (W.J. TACKER) * Page 1, colonne 1, ligne 49 - page 2, colonne 1, ligne 35 * | 1,2 | H 01 G 1/08 |
| | | --- | | |
| X | | US-A-2 460 033 (R.C.A.) * Colonne 2, ligne 18 - colonne 3, ligne 19 * | 1,2 | |
| | | --- | | |
| X | | FR-A- 686 202 (HIRSCH-KUPFER UND MESSING WERKE AG & HERAEUS VACUUM SCHMELZE AG) * Page 2, lignes 5-97; figure 3 * | 1,2 | |
| | | --- | | |
| A | | US-A-3 656 035 (GENERAL ELECTRIC CO.) | | |
| | | ----- | | **DOMAINES TECHNIQUES RECHERCHES (Int. Cl.4)** |
| | | | | H 01 G |

Le présent rapport de recherche a été établi pour toutes les revendications

| Lieu de la recherche | Date d'achèvement de la recherche | Examinateur |
|---|---|---|
| LA HAYE | 02-12-1985 | SCHUERMANS F.G. |